(19) Europäisches Patentamt
European Patent Office
Office européen des brevets

(11) Publication number: **0 331 746 B1**

(12) # EUROPEAN PATENT SPECIFICATION

(45) Date of publication of patent specification: **22.06.94**

(51) Int. Cl.[5]: **C08J 5/18**, C08G 63/18, G11B 7/24

(21) Application number: **88907389.6**

(22) Date of filing: **25.08.88**

(86) International application number: **PCT/JP88/00840**

(87) International publication number: **WO 89/01955 (09.03.89 89/06)**

(54) **POLYESTER FILM.**

(30) Priority: **28.08.87 JP 215732/87**
**10.11.87 JP 283391/87**

(43) Date of publication of application: **13.09.89 Bulletin 89/37**

(45) Publication of the grant of the patent: **22.06.94 Bulletin 94/25**

(84) Designated Contracting States: **DE FR NL**

(56) References cited:
**JP-A- 612 732**
**JP-A- 6 232 029**

(73) Proprietor: **TORAY INDUSTRIES, INC.**
**2-1, Nihonbashi Muromachi 2-chome**
**Chuo-ku**
**Tokyo 103(JP)**

(72) Inventor: **TSUNASHIMA, Kenji**
**1-22, Daigo Kamihayama-cho**
**Fushimi-ku**
**Kyoto-shi Kyoto 601-13(JP)**

Inventor: **AOKI, Seizo**
**454, Tsuchiyama-cho Ohno**
**Koka-gun Shiga 528-02(JP)**
Inventor: **SUZUKI, Masaru**
**6-12, Takenouchi 2-chome**
**Itoh-shi Shizuoka 414(JP)**
Inventor: **HIRAOKA, Toshihiko**
**13-1, Sonoyama 2-chome**
**Otsu-shi Shiga 520(JP)**

(74) Representative: **Coleiro, Raymond et al**
**MEWBURN ELLIS**
**York House**
**23 Kingsway**
**London WC2B 6HP (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates to a polyester film. More particularly, this invention relates to a polyester film which has excellent mechanical properties and optical properties.

As the support layer of optical recording media, polymethylmethacrylate films and polycarbonate films have been conventionally employed (US-A-4614634). Although the polymethylmethacrylate films have excellent optical characteristics, they have poor dimensional stability against a change in temperature and have poor moldability. Although the polycarbonate films are unlikely to be influenced by humidity and have good moldability, they have a drawback in that optical strain is likely to be generated.

To solve these problems, it has been proposed to employ a polyester film as the support layer (JP-A-208645/82). As the polyester film, films of polyethyleneterephthalate and its derivatives are known.

However, when a polyester film is used as the support layer or a cover layer of the optical recording media, the polyester film brings about a problem that optical strain is easily generated due to thermal stress or external force.

That is, if an external force causing bending, stretching or compression of a medium is exerted on the medium to cause the mechanical deformation thereof when the recording media is used, optical strain is formed thereby. When the recording medium is rotated at a high speed as in the case of an optical disk, similar deformation is usually caused by the centrifugal force. Such a deformation causes optical strain or double refraction. This phenomenon is called photoelasticity. Since a polarized laser beam is used for reading the recorded signals, photoelasticity is a major cause of reading error.

Further, if the heat resistance of the film is low, the medium may be deformed due to the heat given to the medium during the processing of the recording medium or during the writing or reading signals, so that surface scattering may be caused or the photoelasticity is enhanced. As a result, the writing may not be conducted completely or reading error may be caused.

Further, if the surface of the film is rough, the light is scattered and interfered, so that the intensity of the recorded signal is largely lowered.

The object of the present invention is to overcome these problems in the conventional technique and to provide a polyester film with which the rate of reading error due to the scattering or interference of the light is low, and which is not deformed easily by the thermal stress or external force so that optical strain is hardlY generated.

That is, the present invention provides a polyester film comprising a polyester at least as a major component which has a modulus of photoelasticity of not more than 1.2 x $10^{-3}$ $mm^2$/kgf (1.22 x $10^{-4}$ $mm^2$/N), which has a maximum surface roughness Rt of not more than 100 nm, and which has a mean interval Sm between adjacent surface projections of not less than 20 $\mu$m. The present invention further provides a polyester film which is prepared by reacting a bifunctional carboxylic acid and/or an ester-forming derivative thereof, which contains not less than 10 mol% of a diphenyldicarboxylic acid and/or a derivative thereof with a dihydroxy compound and/or an ester-forming derivative thereof.

In this specification, unless otherwise specified, the term "film" includes those which are thick and usually called a "sheet".

The polyester film of the present invention can inhibit photoelasticity and has specific surface conditions such that it can prevent reading errors of recorded signals.

Further, the polyester film of the present invention is stable against environmental conditions such as heat, solvent, external forces, as well as humidity and light, so that an optical medium with high reliability may be attained.

The diphenyldicarboxylic acid or a derivative thereof herein is a compound which has one carboxyl group on a phenyl group. Among such compounds, preferred are those in which the position of the carboxyl groups is asymmetric such as 2,2', 2,3' and 3,3'. Needless to say, the compounds may be those additionally having on the benzene ring a functional group such as an alkyl group of which the polarity is not so great. If the position of the carboxyl groups is not symmetrical, it is easy for the main chain of the copolymerised polyester to take a bended structure, so that the amorphousness and the optical characteristics of the film may be improved. When using a dicarboxylic acid such as diphenyl-4,4'-dicarboxylic acid in which the position of the carboxyl groups are symmetrical, since the molecules are likely to be oriented, it is advisable to use such a dicarboxylic acid in the form of a derivative having a side chain with high polarity or in the form of an ester-forming derivative.

The content of the diphenyldicarboxylic acid is not less than 10 mol%, preferably 15 - 70 mol% and more preferably 20 - 50 mol%. If the content is less than 10 mol%, the effect of the diphenyldicarboxylic acid is not shown, and if the content exceeds 70 mol%, the film is brittle so that the processability of the film is degraded. Examples of the derivatives of the diphenyldicarboxylic acid are diphenyl ether dicarboxylic acid, diphenylsulfonedicarboxylic acid, diphenyl thioether dicarboxylic acid, diphenyl ketone dicarboxylic acid and diphenylethanedicarboxylic acid.

Examples of the acid component other than the diphenyldicarboxylic acid are terephthalic acid, isophthalic acid, phthalic acid, naphthalenedicarboxylic acid, diphenoxyethanedicarboxylic acid, cyclohexanedicarboxylic acid, succinic acid, azipic acid, sebacic acid, stilbenedicarboxylic acid, 1,1,3-trimethyl-3-phenylindane-4',5-dicarboxylic acid, as well as oxycarboxylic acids such as p-oxybenzoic acid. Among these, terephthalic acid, isophthalic acid, cyclohexanedicarboxylic acid, sebacic acid and 1,1,3-trimethyl-3-phenylindane-4',5-dicarboxylic acid are especially preferred in the present invention.

Examples of the dihydroxy compound are ethylene glycol, trimethylene glycol, tetramethylene glycol, cyclohexane dimethanol, 2,2-bis(4-hydroxydiphenyl)propane, 2,2-bis(4-hydroxyethoxyphenyl)propane, bis(4-hydroxyphenyl)sulfone, polyethylene glycol, polytetramethylene glycol, diethylene glycol, neopentyl glycol, hydroquinone and cyclohexanediol. Among these, cyclohexane dimethanol, ethylene glycol and tetramethylene glycol are especially preferred in the present invention.

In the polyester, a polyfunctional compound with tri- or more functional groups such as trimellitic acid, trimesic acid, pyromellitic acid, glycerine and pentaerythritol may be copolymerized as long as the polymer retains a substantially linear form. Further, as long as the polymer retains a substantially linear form, a polymer with a molecular weight of 300 - 70,000, such as polyacrylate, polyacrylamide, polyacrylonitrile, polystyrene, polysiloxane, polymethylmethacrylate, polybutylacrylate and derivatives thereof may be graft-copolymerized as a side chain with the polyester main chain.

By attaching a side chain to the polyester main chain, the difference between the polarizability in the direction of the axis of the polyester molecule chain and in the direction perpendicular thereto is reduced, thereby lowering the intrinsic double refraction of the polymer, so that the optical strain is hardly generated. The side chain may be attached by, for example, employing a so called macromonomer which is a macromolecular monomer having a dihydroxyl group or dicarboxyl group as a polymerizable functional group at its end. The structure of the macromonomer may be represented by the following formulae:

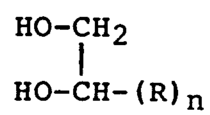

or

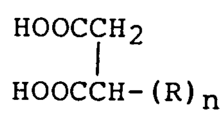

Here, R may be styrene, styreneacrylonitrile, methylmethacrylate or butylacrylate. The macromonomer preferably has a molecular weight of 300 - 6000. By copolymerizing the macromonomer with the dicarboxylic acid and the dihydroxy compound, the side chain may easily be formed.

In the present invention, especially preferred polyesters are those having, as the dicarboxylic acid, dihenyl-2,2'-dicarboxylic acid (diphenic acid), terephthalic acid, isophthalic acid, sebacic acid or 1,1,3-trimethyl-3-phenylindane-4',5-dicarboxylic acid, and having, as the dihydroxy compound, cyclohexanedimethanol, ethylene glycol or tetramethylene glycol.

The modulus of photoelasticity of the polyester is not more than 1.2 x $10^{-3}$ $mm^2$/kgf (1.22 x $10^{-4}$ $mm^2$/N), preferably not more than 0.7 x $10^{-3}$ $mm^2$/kgf (0.71 x $10^{-4}$ $mm^2$/N), preferably not more than 0.4 x $10^{-3}$ $mm^2$/kgf (0.41 x $10^{-4}$ $mm^2$/N).

If the modulus of photoelasticity is more than 1.2 x $10^{-3}$ $mm^2$/kgf (1.22 x $10^{-4}$ $mm^2$/N), the optical strain or double refraction due to mechanical deformation of the film caused by the external forces such as bending, stretching and compression is enhanced, which is the major cause of reading errors.

The maximum surface roughness Rt of the polyester film is not more than 0.1 $\mu$m, preferably not more than 0.03 $\mu$m. The interval Sm between the adjacent peaks is not less than 20 $\mu$m, preferably not less than 100 $\mu$m. If these requirements are not met, the light may be scattered or interefered, so that the obtained light intensity is lowered, thereby causing a reading error.

The polyester film of the present invention preferably has a limiting double refraction $\Delta n_0$ of not more than 0.10, more preferably not more than 0.07, still more preferably not more than 0.05 since if the $\Delta n_0$ is

more than 0.10, the optical anisotropy due to the slight orientation of the molecule chains is enlarged.

The relative viscosity $\eta r$ of the polyester film of the present invention may preferably be 14 - 70, more preferably 20 - 60, for the desired mechanical strength and film-forming properties.

For the desired thermal deformation and mechanical strength of the film, the polyester film of the present invention preferably has a glass transition point Tg of not lower than 80 °C, more preferably not lower than 85 °C, still more preferably not lower than 90 °C.

Although the thickness of the polyester film of the present invention is not limited, the thickness of a stretched sheet may preferably be 6 - 360 $\mu$m, and that of a non-stretched sheet may preferably be 250 - 2000 $\mu$m.

The process of manufacturing the polyester film of the present invention will now be described. It should be noted, however, the process is not limited thereto.

The dicarboxylic acid or an ester derivative thereof and a dihydroxy compound are mixed to react in accordance with a conventional process to obtain a polyester composition which has an ester bond in the main chain and which preferably has a relative viscosity $\eta r$ of 14 - 70.

In cases where ester interchange is required, an ester interchanging catalyst is employed other than the polymerization catalyst. Needless to say, an anti-coloring agent, antioxidant, thermal stabilizer, crystal nucleating agent, lubricant, anti-blocking agent, viscosity-adjusting agent, defoaming agent, transparentizing agent etc may be added.

The polyester containing the diphenyldicarboxylic acid as the major component which is obtained as above and which has a modulus of photoelasticity of not more than 1.2 x $10^{-3}$ $mm^2$/kgf (1.22 x $10^{-4}$ $mm^2$/N)is melt-extruded and cast by a conventional method. In cases where the cast film is used as an optical recording medium, the surface of the film should be smooth so as to attain the maximum roughness Rt of, for example, not more than 0.1 $\mu$m. Therefore, it is preferred to cool the film in the melted state between the casting drum and a quenching roll or between the casting drum and an endless belt while pressing the film. In this case, the surface of the quenching roll integrally provided with the casting drum, or the surface of the endless belt made of a matal must be smooth. That is, the surface of the cooling body is required to be as smooth as not more than 0.1S; ie the maximum height difference of the surface (the difference between the highest and the lowest valley) is within the range 0-0.1$\mu$m inclusive (see JIS B 0601-1982 Section 3.4.3, especially "Remarks 2"). By employing sufficiently cooled surfaces of the cooling body, both surfaces of the film are rapidly cooled to prevent crystallisation, so that a film with excellent transparency and smoothness may be obtained.

Alternatively, the film is cast onto a drum with a smooth surface of not more than 0.1S and the surface of the film not contacting the drum is pressed with a roll with a temperature higher than the glass transition point of the film and then rapidly cooled with a quenching roll.

Alternatively, the extruded polymer in the melted state may also be held as a bank between a pair of rolls having smooth surfaces and then extruded therefrom to conduct calendering.

Alternatively, the extruded film in the melted state is cast onto a smooth metal endless belt and then the film is heated, pressed and rapidly cooled between the endless belt and another smooth metal endless belt.

The thus obtained film with Rt of not more than 0.1 $\mu$m and Sm of not less than 20 $\mu$m may preferably be laminated with an olefin polymer film such as polypropylene, ethylene/propylene copolymer, polymethypentene and ethylene/vinyl acetate copolymer, or an anti-scratching layer may preferably be coated thereon, in order to prevent the scratching of the surface of the film.

The casted film may then be oriented or heat set if necessary.

The method of the evaluation of the characteristics concerning the present invention will now be described.

(1) Glass Transition Point

Ten milligrams of the polyester film is set in a scanning calorimeter and the temperature of the film is raised at a rate of 20 °C/min under nitrogen flow. The glass transition point is defined as the mean temperature of the temperature at which the base line starts to deviate and the temperature at which the curve returns to a new base line. In some cases, the base line does not deviate but an endothermic peak emerges. In that case, the peak temperature is defined as the glass transition point.

(2) Relative Viscosity $\eta$ r

After cooling the polyester with dry ice, the polyester is pulverized to a size of not greater than 100 mesh with a mill. In 100 ml of hot o-chlorophenol with a temperature of 150 °C, 8 g of the pulverized polyester is placed to dissolve it in 1 - 2 minutes. The viscosity $\eta$ of this polymer solution and the viscosity $\eta_0$ of o-chlorophenol are measured at 25 °C and the ratio thereof is defined as the relative viscosity.

$$\eta r = \eta/\eta_0$$

(3) Modulus of Photoelasticity

The change in the double refraction $\Delta$ n when a load of 1 kg is applied to a sample with a width of 10 mm is measured and the modulus of photoelasticity C, is defined as $\Delta n/S$ wherein S means the stress ($kgf/mm^2$) exerted upon the sample (see ASTMS D 4093-82, where the parameter given by this equation is referred to as the "stress-optical constant" when expressed in $m^2/N$). In this measurement, the change in the thickness of the film when the film is subjected to elastic micro deformation can be ignored.

The double refraction in the plane of the film is measured by setting the sample film in a polarizing microscope with a crossed nicol, of which the light source is a sodium D line (589 nm), such that the plane of the sample film is perpendicular to the light axis, and by determining the difference in the optical path $\Gamma$ from the compensation value of a compensator. The double refraction is defined as $\Gamma$ /d wherein d means the thickness of the sample film.

(4) Reading Error

Aluminum is vapor-deposited on one surface of the polyester film and a laser beam is impinged perpendicularly on the non-deposited surface of the polyester film. The laser beam is a linearly polarized semiconductor laser beam with an oscillating wavelength of 780 - 820 nm. After passing through a beam slitter prism, the laser beam passes through a quarter-wave plate to become a circularly polarised light, and the circularly polarized light perpendicularly impinges on the polyester film. The reflected light again passes through the quarter-wove plate to become a linearly polarized light and the linearly polarized light reimpinges on the beam slitter prism. Only the linearly polarized light of the inpinging light passes through the beam slitter prism and the re-inpinging light which has a polarized wave plane deviated by 90 degrees from that of the inpinging light is reflected. The reflected light reaches an optical signal detector and the intensity thereof is measured. The reading error is defined as $(I_0 - I)/I$ wherein $I_0$ means the intensity of the reflected light detected when the laser beam impinges on a flat film and I means the intensity of the reflected light detected when the laser beam impinges on a film bended to have a radius of curvature of 100 mm.

(5) Limiting Double Refraction Value

Limiting double refraction value is the anisotropy of the index of refraction due to the theoretical maximum uniaxial orientation of a polymer. In the present invention, the limiting double refraction value is measured by a simplified method in which monofilaments with a diameter of 250 µm are stretched at various temperatures, and the limiting double refraction value is defined as the maximum double refraction value at the extrapolated stretching ratio at which the monofilament is broken.

(6) Maximum Height Rt and Mean Interval between Adjacent Peaks

The maximum surface roughness Rt and the mean interval of the adjacent peaks were measured using a high precision thin film level difference-measuring apparatus ET-10 manufactured by Kosaka Kenkyusho. The Rt is defined as the distance between the highest peak and the deepest valley of the roughness curve, and the Sm is defined as the average distance between a pair of a peak and a valley of the roughness curve which intersects the center line. The measuring conditions are as follows and the average of 20 times measurement is shown.

Radius of Touching pin: 0.5 µm
Load of Touching Pin: 5 mg
Measurement Length: 1 mm
Cutoff Value: 0.08 mm

The details of the definition of the parameters are described in, for example, Jiro Nara, "Method of Measuring and Evaluating Surface Roughness" (Sogo gijutsu Center, 1983).

Embodiments of the invention will now be described in detail with reference to the following Examples.

Example 1

A polyester having as the dicarboxylic acid component terephthalic acid (80 mol%) and diphenyl-2,2'-dicarboxylic acid (20 mol%) and having as the dihydroxy component 1,4-cyclohexanedimethanol was heated to 290°, and was cast on a mirror-finished drum from a T-die in accordance with a conventional method to obtain a non-oriented film with a thickness of 400 µm.

Example 2

A polyester having as the dicarboxylic acid terephthalic acid (50 mol%) and diphenyl-2,2'-dicarboxylic acid (50 mol%) and having as the dihydroxy component 1,4-cyclohexanedimethanol was cast in the same manner as in Example 1 to obtain a non-oriented film with a thickness of 400 µm.

Comparative Example 1

A polyester having as the dicarboxylic acid terephthalic acid (95 mol%) and diphenyl-2,2'-dicarboxylic acid (5 mol%) and having as the dihydroxy component 1,4-cyclohexanedimethanol was cast in the same manner as in Example 1 to obtain a non-oriented film with a thickness of 400 µm.

Comparative Example 2

A non-oriented film with a thickness of 400 um was obtained as in Example 1 except that 0.15 wt% of $SiO_2$ with an average particle size of 30 mµ was added. The characteristics of the films of Examples 1 and 2 and Comparative Example 1 were evaluated to obtain the results shown in Table 1.

Table 1

| Evaluated Items | Example 1 | Example 2 | Comparative Example 1 | Comparative Example 2 |
|---|---|---|---|---|
| Glass Transition Point Tg (°C) | 85 | 88 | 81 | 85 |
| Relative Viscosity $\eta r$ | 20 | 20 | 16 | 20 |
| Limiting Double Refraction | 0.09 | 0.05 | 0.17 | 0.09 |
| Photoelasticity ($mm^2$/kgf) ($mm^2$/N) | 0.7 $\times 10^{-3}$ ($0.71 \times 10^{-4}$) | 0.4 $\times 10^{-3}$ ($0.41 \times 10^{-4}$) | 1.7 $\times 10^{-3}$ ($1.73 \times 10^{-4}$) | 0.7 $\times 10^{-3}$ ($0.71 \times 10^{-4}$) |
| ~~Rate of~~ Reading Error | 0.054 | 0.002 | 0.42 | 0.58 |
| Maximum Roughness Rt (nm) | 3 | 5 | 10 | 18 |
| Peak Interval Sm ($\mu$m) | 100 | 250 | 70 | 2 |

Example 3

A polyester having as the dicarboxylic acid component terephthalic acid (70 mol%) and diphenyl ether-2,2'-dicarboxylic acid (30 mol%) and having as the dihydroxy component 1,4-cyclohexanedimethanol (90 mol%) and ethylene glycol (10 mol%), which polyester has a relative viscosity of 22, was cast in the same manner as in Example 3 to obtain a non-oriented film with a thickness of 400 um.

Table 2

| Evaluated Items | Example 3 |
|---|---|
| Glass Transition Point Tg (°C) | 85 |
| Relative Viscosity $\eta r$ | 22 |
| Limiting Double Refraction Value | 0.08 |
| Photoelasticity ($mm^2$/kgf)($mm^2$/N) | $0.9 \times 10^{-3}$ ($0.92 \times 10^{-4}$) |
| Reading Error | 0.04 |
| Rt (nm) | 8 |
| Sm (µm) | 350 |

Comparative Example 3

A polyester having as the dicarboxylic acid component terephthalic acid (85 mol%) and isophthalic acid (15 mol%) and having as the dihydroxy component 1,4-cyclohexanedimethanol, which polyester has a relative viscosity of 22, was cast in the same manner as in Example 3 to obtain a non-oriented film with a thickness of 400 µm.

The characteristics of the film obtained in Comparative Example 3 were evaluated. As shown in Table 3, the photoelasticity of the film is so large that it cannot be used as a cover film of an optical recording medium.

Table 3

| Evaluated Items | Comparative Example 3 |
|---|---|
| Glass Transition Point Tg (°C) | 85 |
| Relative Viscosity $\eta r$ | 18 |
| Limiting Double Refraction Value | 0.21 |
| Photoelasticity ($mm^2$/kgf)($mm^2$/N) | $1.6 \times 10^{-3}$ ($1.63 \times 10^{-4}$) |
| Reading Error | 0.45 |
| Rt (nm) | 25 |
| Sm (µm) | 100 |

INDUSTRIAL APPLICABILITY

The polyester film of the present invention does not have optical strain even if a thermal stress or an external force is exerted upon it because its photoelasticity is small. Further, since the polyester film of the present invention has a specific surface features, the scattering of light and interference are small. Therefore, the film of the present invention is suitable for the support layer of optical recording media such as optical cards and optical recording tapes.

## Claims

**1.** A polyester film comprising a polyester at least as a major component, characterized in that the film has a modulus of photoelasticity, C, of not more than $1.2 \times 10^{-3}$ $mm^2$/kgf ($1.22 \times 10^{-4}$ $mm^2$/N), maximum surface roughness Rt of not more than 100 nm and a mean interval Sm between adjacent projections in the surface of the film of not less than 20 µm, the modulus of photoelasticity, measured for a sample of width 10mm, being given by the equation

$$C = \Delta n/S$$

where C is the modulus of elasticity,
$\Delta n$ is the change in double refraction, n,
S is the stress applied (kgf/$mm^2$), and
n is the difference in optical path per unit thickness of sample as measured by an optical compensator

using a sodium D line (589 nm) light source.

2. The polyester film of claim 1, wherein the polyester is prepared by reacting a bifunctional carboxylic acid and/or an ester-forming derivative thereof, which contains not less than 10 mol% of a diphenyldicarboxylic acid and/or a derivative thereof with a dihydroxy compound and/or an ester-forming derivative thereof.

3. The polyester film of claim 2, wherein the diphenyldicarboxylic acid or the derivative thereof is at least one of diphenyl-2,2'-dicarboxylic acid and derivatives thereof, diphenyl-2,3'-dicarboxylic acid and derivatives thereof, and diphenyl-3,3'-dicarboxylic acid and derivatives thereof.

4. The polyester film of claim 2 or 3, wherein the derivative of the diphenyldicarboxylic acid is at least one of diphenyl ether dicarboxylic acid, diphenylsulfonedicarboxylic acid, diphenyl thioether dicarboxylic acid, diphenyl ketone dicarboxylic acid and diphenylethanedicarboxylic acid.

5. The polyester film of any preceding claim, wherein the glass transition point Tg of the polyester film is not lower than 80 °C.

6. An optical recording medium comprising the polyester film of any one of claims 1 - 3.

7. An optical recording medium comprising the polyester film of claim 5.

**Patentansprüche**

1. Polyesterfilm, umfassend einen Polyester als zumindest einen Hauptbestandteil, dadurch gekennzeichnet, daß der Film einen Photoelastizitätsmodul C von nicht mehr als 1,2 x $10^{-3}$ $mm^2$/kp (1,22 x $10^{-4}$ $mm^2$/N), eine maximale Oberflächenrauhigkeit Rt von nicht mehr als 100 nm und ein mittleres Intervall Sm zwischen benachbarten Vorsprüngen in der Oberfläche des Films von nicht weniger als 20 um aufweist, wobei der Photoelastizitätsmodul, für eine Probe mit einer Breite von 10 mm gemessen, durch die Gleichung

$$C = \Delta n/S$$

dargestellt wird, worin C der Elastizitätsmodul ist,
$\Delta n$ die Änderung der Doppelbrechung n ist,
S die ausgeübte Belastung (kp/$mm^2$) ist und
n die Differenz im optischen Weg pro Dickeneinheit der Probe wie durch einen optischen Kompensator unter Verwendung einer Natrium D-Linien (589 nm)-Lichtquelle gemessen.

2. Polyesterfilm nach Anspruch 1, worin der Polyester durch Umsetzen einer bifunktionalen Karbonsäure und/oder eines esterbildenden Derivats davon, das nicht weniger als 10 Mol-% einer Diphenyldikarbonsäure und/oder eines Derivats davon enthält, mit einer Dihydroxyverbindung und/oder einem esterbildenden Derivat davon hergestellt ist.

3. Polyesterfilm nach Anspruch 2, worin die Diphenyldikarbonsäure oder das Derivat davon zumindest eines aus Diphenyl-2,2'-dikarbonsäure und Derivaten davon, Diphenyl-2,3'-dikarbonsäure und Derivaten davon und Diphenyl-3,3'-dikarbonsäure und Derivaten davon ist.

4. Polyesterfilm nach Anspruch 2 oder 3, worin das Derivat der Diphenyldikarbonsäure zumindest eines aus Diphenylätherdikarbonsäure, Diphenylsulfondikarbonsäure, Diphenylthioätherdikarbonsäure, Diphenylketondikarbonsäure und Diphenyläthandikarbonsäure ist.

5. Polyesterfilm nach einem der vorhergehenden Ansprüche, worin der Glasübergangspunkt Tg des Polyesterfilms nicht unterhalb von 80 °C liegt.

6. Optisches Aufzeichnungsmedium, das den Polyesterfilm nach einem der Ansprüche 1-3 umfaßt.

7. Optisches Aufzeichnungsmedium, das den Polyesterfilm nach Anspruch 5 umfaßt.

## Revendications

1. Un film de polyester comprenant un polyester au moins comme composant principal, caractérisé en ce que le film a un module de photo-élasticité C n'excédant pas 1,2 x $10^{-3}$ $mm^2$/kgf (1,22 x $10^{-4}$ $mm^2$/N), une rugosité maximale de surface Rt n'excédant pas 100 nm et un intervalle moyen Sm entre des saillies adjacentes dans la surface du film non inférieur à 20 µm, le module de photoélasticité, mesuré pour un échantillon de 10 mm de largeur étant donné par l'équation:

   $C = \Delta n/s$

   où C est le module d'élasticité,
   Δn est le changement de double réfraction n,
   S est la contrainte appliquée (kgf/$mm^2$), et
   n est la différence de trajet optique par unité d'épaisseur d'échantillon telle que mesurée par un compensateur optique utilisant une source lumineuse à raie de sodium D (589 nm).

2. Le film de polyester de la revendication 1, dans lequel le polyester est préparé en faisant réagir un acide carboxylique bifonctionnel et/ou un dérivê formant ester de celui-ci, qui contient non moins de 10% en mole d'un acide diphényldicarboxylique et/ou un dérivé de celui-ci avec un composant dihydroxy et/ou un dérivé formant ester de celui-ci.

3. Le film de polyester dans la revendication 2, dans lequel l'acide diphényldicarboxylique ou le dérive de celui-ci est au moins l'un des composés comprenant l'acide diphényl-2,2'-dicarboxylique et des dérivés de celui-ci, l'acide diphényl-2,3'-dicarboxylique et les dérivés de celui-ci, et l'acide diphényl-3,3'-dicarboxylique et des dérivés de celui-ci.

4. Le film de polyester de la revendication 2 ou 3, dans lequel le dérivé de l'acide diphényldicarboxylique est au moins l'un des composés comprenant l'acide diphényl-éther-dicarboxylique, l'acide diphénylsulfonedicarboxylique, l'acide diphényl-thioéther-dicarboxylique, l'acide diphénylcétone-dicarboxylique et l'acide diphényléthanedicarboxylique.

5. Le film de polyester de toute revendication précédente, dans lequel le point de transition du verre Tg du film de polyester n'est pas inférieur à 80 °C.

6. Un milieu d'enregistrement optique comprenant le film de polyester selon l'une quelconque des revendications 1-3.

7. Un milieu d'enregistrement optique comprenant le film de polyester de la revendication 5.